Europäisches Patentamt

European Patent Office

Office européen des brevets

(19)

(11) Veröffentlichungsnummer: **0 610 873 A2**

(12) **EUROPÄISCHE PATENTANMELDUNG**

(21) Anmeldenummer: **94101852.5**

(22) Anmeldetag: **08.02.94**

(51) Int. Cl.5: **D06N 3/06**, D06N 3/18

(30) Priorität: **11.02.93 DE 4304079**

(43) Veröffentlichungstag der Anmeldung:
**17.08.94 Patentblatt 94/33**

(84) Benannte Vertragsstaaten:
**AT BE CH DE DK ES FR GB GR IE IT LI NL PT SE**

(71) Anmelder: **MEHLER TECHNISCHE TEXTILIEN GmbH**
**Edelzeller Strasse 44**
**D-36043 Fulda (DE)**

(72) Erfinder: **Ouell, Hermann**

**Berthostrasse 13**
**D-36088 Hünfeld (DE)**
Erfinder: **Aschenbrücker, Stefan**
**Hünfelder Strasse 22**
**D-36100 Petersberg (DE)**
Erfinder: **Schulz, Günter**
**Stettiner Strasse 4**
**D-30826 Fulde (DE)**

(74) Vertreter: **Dr. Fuchs, Dr. Luderschmidt Dr.**
**Mehler, Dipl.-Ing. Weiss Patentanwälte**
**Abraham-Lincoln-Strasse 7**
**D-65189 Wiesbaden (DE)**

(54) **Ledermaterial für textile Bauten.**

(57) Die Erfindung betrifft ein schwerentflammbares Kedermaterial (1) für textile Bauten, wie Zelt-, Hallen- und Membrankonstruktionen. Erfindungsgemäß ist die Rückseite eines textilen Flächengebildes (3) eines einseitig mit schwerentflammbar rezeptiertem Polyvinylchloridweich-Material (2) beschichtetes Kedermaterial (1) mit einem thermoplastischen oder vernetzten Elastomer (4), welches durch Schwerentflammbarkeitsadditive flammhemmend ausgerüstet ist, beschichtet. Darüber hinaus beinhaltet die Erfindung sowohl farblich unterschiedliche Ausgestaltungen der beiden Beschichtungsseiten, als auch eine opake Ausführungsform.

Fig. 1

EP 0 610 873 A2

Die Erfindung betrifft ein Kedermaterial für textile Bauten, wie Zelt-, Hallen- und Membrankonstruktionen.

Die für die textilen Bauten benutzten Membranwerkstoffmaterialien müssen bestimmte Anforderungen in bezug auf ihre Schwerentflammbarkeit erfüllen, um den Sicherheitsstandard für solche Bauten auf ein entsprechend hohes Niveau zu bringen. Diese Anforderungen werden jedoch von bisher benutzten Kedermaterialien nicht erfüllt. Das schwerentflammbare Kedermaterial soll verhindern, daß im Falle eines Brandes die Flammausbreitung entlang des Kedermaterials erfolgt, da an dieser Stelle die Membranwerkstoffe mit festen Tragekonstruktionen verbunden sind, und ein Lösen dieser Verbindungsstelle zum Einstürzen des Membranmaterials in das Zeltinnere führen kann.

In der Regel werden bei Zelt- und Membrankonstruktionen Kedermaterialien verwendet, die größtenteils nur einseitig mit Polyvinylchlorid-Weichmasse (im folgenden auch mit PVC bezeichnet) beschichtet sind und rückseitig das rohe Gewebe zeigen. Es gibt in neuerer Zeit auch Ausführungsformen, bei denen eine Rückseitenbeschichtung aus leicht entflammbaren Acrylatpolymeren vorgenommen wird. Das Kedermaterial dient dazu, den Membranwerkstoff mit tragenden Konstruktionen aus Metall oder Holz zu verbinden und das Membranmaterial an diesen Konstruktionen zu arretieren. Des weiteren wird teilweise der Zweck verfolgt, einen Haltepunkt für das Membranmaterial zu schaffen, wenn beispielsweise in Längsrichtung das Membranmaterial gedehnt und somit auch stramm gezogen wird, und orthogonal zu der Spannrichtung eine Schrumpfspannung auftritt, die dann von der Kedereinspannung übernommen wird.

Ein solcher Keder ist üblicherweise wie folgt aufgebaut. In das Kedermaterial wird auf der PVC-Seite eine Kederschnur eingelegt, die meist aus einem zylindrischen PVC-Vollprofil, welches durch Extrusion hergestellt wird, besteht. Anschließend wird die PVC-Seite des Kedermaterials derart linienförmig verschweißt, daß die Kederschnur in einer röhrenförmigen Schlaufe liegt und die Enden des Kedermaterials unverschweißt bleiben. Die offenen Enden des Kedermaterials werden, wie eine Klemme, beidseitig um den Rand des Membranmaterials gelegt. In diesem Zustand wird meistens mittels einer Hochfrequenz-Schweißmaschine das Kedermaterial mit dem Membranmaterial verbunden. Dies geschieht problemlos, da homogene bzw. materialgleiche oder materialähnliche Stoffe miteinander verbunden werden. Die Kederschnur mit dem umhüllenden Kedermaterial wird bei der Errichtung zum Beispiel eines Zeltes in eine Kedernut, die als Hohlkehle beispielsweise in einem Aluminiumträger eingebracht ist, geschoben. Hierbei treten natürlich hohe Belastungen auf, da die Außenseite des Kedermaterials in den Hohlkehlen der Metall- oder auch Holzträger gescheuert wird und außerdem auch ständig den Witterungseinflüssen ausgesetzt ist. Deshalb bestehen folgende Anforderungen an das Kedermaterial:

- Trägergewebe aus hochfestem Garnmaterial;
- gute Gleitfähigkeit der nach außen gerichteten Kederseite;
- Kältebeständigkeit bis -30 °C;
- mikrobizide Ausrüstung des PVC-Materials;
- Alterungsbeständigkeit;
- gute UV-Stabilität;
- Lichtechtheit;
- gute Nahtstandfestigkeit in der Schweißnaht; und
- hohe Weiterreißfestigkeit.

Dadurch, daß das Kedermaterial einem recht rauhen Betrieb ausgesetzt ist, verursacht einerseits durch Materialabrieb an den Tragegerüsten, andererseits aber auch durch Witterungseinflüsse, sowie Schmutzaufnahme bei der Montage und Demontage der Zelte, bleibt ein schmutziges Aussehen dieser Keder nicht aus und führt oft zu einer optischen Beeinträchtigung der textilen Bauten. Deshalb ist man dem Wunsch der Anwender schon recht früh nachgekommen, die bisher als reine Textilseite ausgebildete Kederrückseite mit einer Beschichtung zu versehen. Bei einer bekannten Ausführung ist die PVC-Weichseite weiß beschichtet und die Rückseite trägt eine silberfarbige, leicht entflammbare Beschichtung.

Grundsätzlich bedürfen die oben beschriebenen textilen Bauten, wie Zelt-, Hallen und Membrankonstruktionen, hinsichtlich der eingesetzten Baustoffe beispielsweise in Deutschland einer bauaufsichtlichen Zulassung. Die Membranwerkstoffe müssen deshalb so hergestellt sein, daß sie als schwerentflammbar einzustufen sind. Die hierbei jeweils geforderten Brennormen und Brenntestverfahren sind meist länderspezifisch und unterschiedlich. Die Voraussetzung der Schwerentflammbarkeit wird jedoch heute nur von den eingesetzten Membranwerkstoffen erfüllt.

Allen heute auf dem Markt verfügbaren Kedermaterialien, seien sie nun ein- oder beidseitig beschichtet, ist jedoch gemein, daß sie die geforderte Brennorm nicht erfüllen. Somit stellen sie einen erheblichen Schwachpunkt in der gesamten Gattung des textilen Bauens dar.

Die besondere Gefahrenquelle ist, wie schon erwähnt, der Umstand, daß im Brandfall gerade die Halte- und Einspannstelle für den Membranwerkstoff zerstört wird.

Der Erfindung liegt daher die Aufgabe zugrunde, ein Kedermaterial für textile Bauten zu schaffen, das schwerentflammbar ist.

Die Aufgabe wird gelöst durch ein Kedermaterial für textile Bauten, wie Zelt-, Hallen- und Membrankonstruktionen, aufweisend ein beidseitig mit einem Polymer beschichtetes, textiles Flächengebilde, das auf einer Seite mit einem flammfest rezeptierten Polyvinylchloridweich-Material, das ggf. Pigmente, aktive und inaktive Füllstoffe und Stabilisatoren aufweist, und auf der anderen Seite mit einem flammhemmenden Schwerentflammbarkeitsadditive enthaltenden thermoplastischen oder vernetzten Elastomer beschichtet ist.

Als textiles Flächengebilde zur Herstellung des erfindungsgemäßen Kedermaterials wird üblicherweise ein Gewebe, ein Gelege, eine Wirkware, ein Vlies, eine Vliesraschelware und dgl. eingesetzt, insbesondere ein Gewebe aus polymeren, hochfesten Garnen eingesetzt, wobei als Garnmaterialien beispielsweise Polyester (PES), Polyamid 66 (PA66), Polyethylen, Aramide und Mischungen hier in Frage kommen können. Bevorzugt ist Polyester als Garnmaterial.

Für den Garnaufbau werden üblicherweise Endlosfilamente, beispielsweise Multifilament oder Monofil, Stapelfasergarn und dergleichen eingesetzt, wobei vorzugsweise endloses Multifilament zum Einsatz kommt.

Die Garnfestigkeit liegt üblicherweise bei > 50 cN/tex, vorzugsweise > 70 cN/tex.

Das Gewebe kann in Leinwandbindung (1/1 (L 1/1), Panama-Bindung 2/2 (P 2/2) und dergleichen gewebt sein. Es können jedoch aber auch andere Spezialbindungen zum Einsatz kommen.

Die Garnfeinheit beträgt beispielsweise 550, 1100, 1670 oder 2000 dtex, wobei vorzugsweise 1100 oder 1670 dtex zum Einsatz kommen.

In weiterer Ausbildung der Erfindung kann die Polyvinylchloridweich-Beschichtung mit einer Schutzschicht aus einem thermoplastischen Lack versehen sein.

Die PVC-Beschichtung weist üblicherweise 30-50 Gew.%, vorzugsweise ca. 39 Gew.% an reinem PVC-Material auf.

Zusätzlich weist diese PVC-Beschichtung eine Weichmacherkomponente auf, wobei beispielsweise Weichmacher auf Phthalatester-Basis oder Phosphatester-Basis eingesetzt werden können. Zu Phthalat-Weichmachern gehören beispielsweise Di(2-ethylhexyl)phthalat (DOP), Diisodecylphthalat (DIDP), Diisononylphthalat (DINP) und dergleichen. Zu Phosphat-Weichmachern gehören beispielsweise Diphenyl-(2-ethylhexyl)phosphat (DOP), Trikresylphosphat (TCP) und dergleichen. Die Anteile dieser Weichmacher in der PVC-Beschichtung liegen üblicherweise in einem Bereich von 30-50 Gew.%, vorzugsweise bei etwa 39 Gew.%.

Die PVC-Beschichtungsmasse kann weiterhin Pigmente, aktive und inaktive Füllstoffe aufweisen, beispielsweise Titanoxid, Calciumcarbonat, Antimonoxid, Aluminiumhydroxid und dergleichen. Diese Stoffe liegen üblicherweise in einer Menge von 15-30 Gew.%, vorzugsweise ca. bei 19 Gew.% vor.

Schließlich können auch in der PVC-Masse Stabilisatoren, beispielsweise Barium/Zink (BaZn)-Stabilisatoren, epoxidiertes Sojabohnenöl und dergleichen vorliegen. Die Menge der Stabilisatoren beträgt ca. 2-5, vorzugsweise 3 Gew.%.

Das Auftragsgewicht der PVC-Beschichtung liegt üblicherweise in einem Bereich von 200-600 g/m², vorzugsweise bei ca. 350 g/m².

Die Elastomer-Beschichtung kann aus einem thermoplastischen oder vernetzten Elastomer bestehen.

Als Elastomere können beispielsweise eingesetzt werden natürliche oder künstliche Kautschuke, chlorsulfonierte Polyethylene, Polyurethane, Polyacrylate, Polymethacrylate, Gemische aus Polyurethanen und Polyacrylaten, Gemische aus Polyurethanen und Polymethacrylaten, Gemische aus Polyacrylaten und Fluorpolymeren sowie Gemische aus Polymethacrylaten und Fluorpolymeren.

Vorteilhafterweise kann als Elastomer ein natürlicher oder künstlicher Kautschuk (Butylkautschuk, EPM, EPDM, halogenierte Kautschuke) in Frage kommen, vorzugsweise Polychloropren-Kautschuk.

Die Elastomer-Beschichtungsmasse enthält vorteilhafterweise einen Kautschukanteil von 40-75 Gew.%, vorzugsweise ca. 60 Gew.%. Des weiteren können in der Beschichtungsmasse Vulkanisationsadditive, Verarbeitungsadditive und Beschleuniger vorliegen, wobei deren Anteil bei 3-10 Gew.%, vorzugsweise ca. 7 Gew.% liegen.

Weiterhin können in der Elastomer-Beschichtungsmasse Alterungs- und Ozonschutzmittel in einer Menge von 1-5 Gew.%, vorzugsweise etwa 3 Gew.% vorliegen.

Schließlich kann auch diese Elastomer-Beschichtungsmasse Pigmente, aktive und inaktive Füllstoffe, wie Titanoxid, Antimonoxid, Talkum und dergleichen, vorzugsweise ca. 30 Gew.%, bezogen auf die Gesamt-Elastomer-Beschichtung, vor.

Die Elastomer-Beschichtungsmasse kann entweder als Lösung, beispielsweise durch ein Spritzbeschichtungsverfahren aufgebracht werden oder als Paste, beispielsweise durch ein Direktbeschichtungsverfahren aufgestrichen bzw. aufgerakelt werden. Darüber hinaus ist es auch möglich, die Elastomer-Beschichtungsmasse als fertige Schicht beispielsweise durch ein Laminier- oder Transferbeschichtungsverfahren aufzubringen.

Das Auftragsgewicht der Elastomer-Schicht beträgt ca. 30-100 g/m$^2$, insbesondere 45 g/m$^2$ auf der Rückseite des textilen Flächengebildes.

Vorzugsweise weist die mit Polyvinylchloridweich-Material beschichtete Seite ein höheres Beschichtungsgewicht auf als die mit dem Elastomer beschichtete Seite. Diese Maßnahme bewirkt, daß auf der PVC-Seite die mit dem Membranmaterial mittels beispielsweise Hochfrequenz-Verschweißung verbunden wird, genügend Polymermasse für die Verschweißung vorhanden ist.

In weiterer Ausbildung der Erfindung weist die mit Polyvinylchloridweich-Material beschichtete Seite mindestens eine äußere Beschichtungslage aus vorzugsweise schwarzer Farbe auf. Dadurch wird das Kedermaterial weitestgehend lichtundurchlässig ausgeführt, so daß ein opakes Kedermaterial zur Verfügung gestellt wird.

Die Schutzschicht besteht üblicherweise aus einem Lack auf Polymerbasis, wobei hierfür Polyurethane, Polyacrylate, PVC, Fluorkunststoffe und Copolymere dieser Kunststoffe und Mischungen aus diesen Kunststoffen in Frage kommen. Das Auftragsgewicht der Schutzschicht liegt dabei in einem Bereich von 2-10 g/m$^2$, vorzugsweise bei 5 g/m$^2$, bezogen auf die PVC-Beschichtung.

Die beiderseitigen äußeren Beschichtungen des Kedermaterials können farbgleich oder unterschiedlich ausgebildet sein. Letztere Maßnahmen sind teilweise ein Wunsch der Anwender und werden oftmals realisiert, um zwischen dem Membranmaterial und dem optisch sichtbaren Teil des Kedermaterials eine Farbhomogenität herbeizuführen oder aber um besondere Farbeffekte im Einspannbereich des Membranmaterials zu erzielen, wenn es um eine farbliche Abstufung zum Membranmaterial selbst geht.

Schließlich kann das textile Flächengebilde entweder durch seine Fasern selbst schwerentflammbar sein, welches bekanntermaßen durch Zusatz von entsprechenden Additiven in die Spinnlösung bzw. Spinnschmelze oder chemische Nachbehandlung der Fasern nach der Spinnung, verbunden mit Migrationseffekten von Schwerentflammbarkeitskomponenten in das Faserpolymer, erreicht wird oder durch einen nachträglich eingeleiteten Ausrüstungsvorgang am fertigen textilen Flächengebilde mittels flammfest eingestellter Rezepturen.

Durch ein entsprechend ausgerüstetes Garn und ein daraus hergestelltes Gewebe, bzw. durch eine wasserabweisende Ausrüstung des fertigen Gewebes oder durch eine geeignete Beschichtung, die den Freiraum des Gewebes und zwischen den Faserfilamenten so durchdringt, daß der Freiraum ausgefüllt wird, weist das erfindungsgemäße Kedermaterial einen erhöhten Schutz gegen eindringende Feuchtigkeit auf.

Das Eindringen der Feuchtigkeit, beispielsweise über Schnittkanten oder unbeschichtete Flächen ist auf Kapillarkräfte zurückzuführen und wird als Dochteffekt bezeichnet. Das Kedermaterial der vorliegenden Erfindung weist gegenüber herkömmlichen Materialien einen verminderten Dochteffekt auf. Vorzugsweise kann der Dochteffekt vollständig vermieden werden. Durch die Verminderung bzw. Vermeidung des Dochteffektes kommt es folglich auch zu einer Verringerung der Migration von Schmutz in das Kedermaterial.

Der Dochteffekt kann bestimmt werden, indem in das zu testende Material mit einer sehr scharfen Rasier- oder Skalpellklinge ein Kreuzschnitt eingebracht wird. Die Kreuzschnitte verlaufen dabei jeweils exakt in Kett- und Schußrichtung und sind je 1 cm lang. Auf diesen Kreuzschnitt wird dann ein Tropfen handelsübliche Tinte gegeben, die man 45 Minuten lang bei Raumtemperatur auf dem Schnitt stehenläßt. Nach 45 Minuten wird eventuell überstehende Flüssigkeit abgetupft.

Die aufgrund der Kapillarwirkung der Garne entstehende Eindringtiefe der Tinte kann sehr gut im Durchlicht beobachtet werden. Sie wird als Fleckdurchmesser in Kett- und Schußrichtung angegeben.

Der Dochteffekt wird entsprechend dem Fleckdurchmesser charakterisiert. Dabei ergibt sich bei Raumtemperatur folgende Klassifizierung:

- Fleckdurchmesser 0 - 1 cm: kein Dochteffekt
- Fleckdurchmesser 1 - 4 cm: geringer Dochteffekt, und
- Fleckdurchmesser > 4 cm: normaler Dochteffekt,

wobei der "Fleckdurchmesser" den größten Durchmesser des Fleckes darstellt.

Das erfindungsgemäße schwerentflammbare Kedermaterial stellt für die Fachwelt einen überraschend neuen und unerwarteten Innovationssprung dar. Das lange Bemühen um die Entwicklung eines schwerentflammbaren Kedermaterials konnte erst in der erfindungsgemäßen Lösung durch den Einsatz eines für die beschriebene Gattung völlig neuen und bisher noch nicht eingesetzten Polymermaterials gefunden werden. Gerade in der Kombination der auf der PVC-Weichseite gebotenen Materialhomogenität zum Membranmaterial und andererseits durch das Aufbringen einer dünnen Elastomerschicht auf der anderen Kedermaterialseite ist eine Lösung gefunden worden, die alle Sicherheits- und übrigen Anforderungen erfüllt.

EP 0 610 873 A2

Es erfüllt ein marktüblicher Keder mit rückseitiger Silberlackierung nicht die Anforderungen gemäß DIN 4102 B2. Demgegenüber wurden diese Anforderungen von einem erfindungsgemäßen Keder erfüllt, der in die Schwerentflammbarkeitsklasse M 2 nach französischer Prüfnorm NFP 92503 und dazugehöriger Auswertungsnorm NFP 92507 eingestuft werden kann.

Darüber hinaus ergeben sich mit dem erfindungsgemäßen Material weitere zahlreiche überraschende Vorteile:
- sehr gute Gleitfähigkeit;
- gute Abriebfestigkeit;
- Schutz gegen Witterungseinflüsse;
- gutes Reinigungsverhalten; und
- Schutz gegen eindringende Feuchtigkeit.

Die mit dem neuen schwerentflammbaren Kedermaterial durchgeführten Verarbeitungsversuche haben gezeigt, daß dieses Material genausogut handhabbar und verschweißbar ist, wie die derzeitig eingesetzten Materialien. Dadurch kann das Kedermaterial auf vorhandenen Konfektions- und Schweißmaschinen problemlos verarbeitet werden.

Außerdem ist die Herstellung eines solchen Materials in einer Ausgestaltungsform insofern einfach durchführbar, weil auf die textile Seite eines vorhandenen Kedermaterials lediglich die schwerentflammbar rezeptierte Beschichtung aufgebracht wird.

Anhand der zugehörigen Zeichnungen werden fünf Ausführungsbeispiele der vorliegenden Erfindung näher beschrieben. Dabei zeigen die Zeichnungen in

Fig. 1: den schematischen Aufbau des schwerentflammbaren Kedermaterials in einer ersten Ausführungsform; und

Fig. 2: den schematischen Aufbau des schwerentflammbaren Kedermaterials in einer zweiten Ausführungsform in einer opak ausgeführten Version.

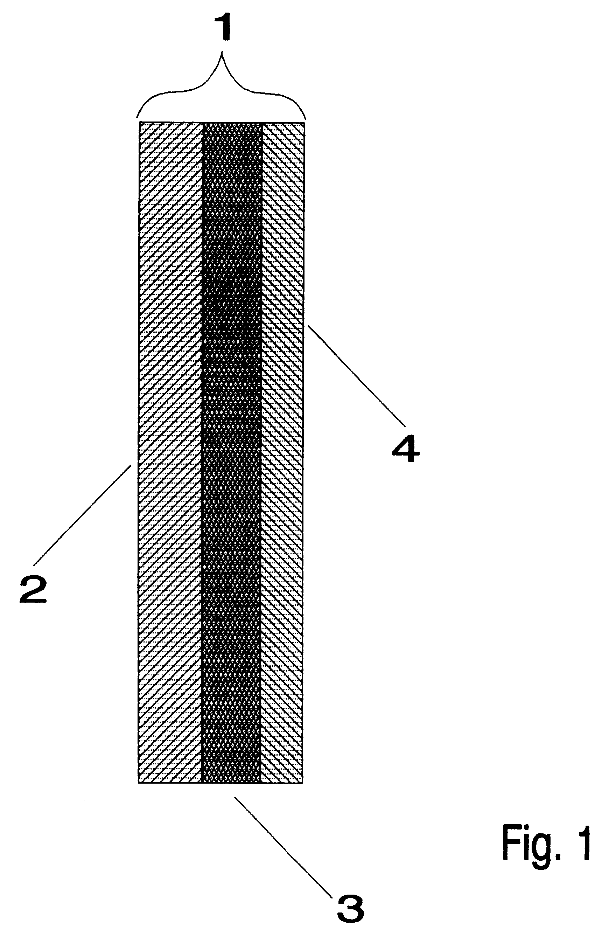

Gemäß Fig. 1 besteht das Kedermaterial 1 aus einem textilen Flächengebilde 3, bei dem auf der einen Seite eine Polyvinylchloridweich-Beschichtung 2 aufgebracht ist. Auf der anderen Seite des textilen Flächengebildes 3 ist eine schwerentflammbar rezeptierte Elastomer-Beschichtung 4 aufgebracht.

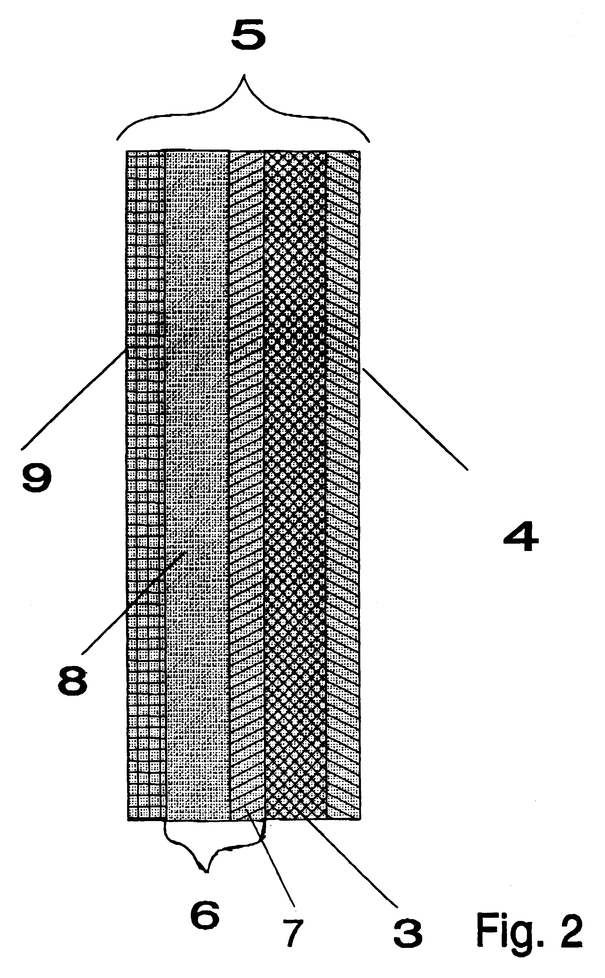

In Fig. 2 ist ein weiteres Kedermaterial 5 dargestellt, das wiederum - wie in Fig. 1 gezeigt und in obiger Weise erläutert - aus einem textilen Flächengebilde 3 besteht, das auf seiner Rückseite mit einer schwerentflammbar rezeptierten Elastomer-Beschichtung 4 ausgerüstet ist.

Anstelle einer einschichtigen PVC-Beschichtung weist nunmehr das Kedermaterial 5 eine PVC-Laminatschicht 6 auf, die aus einer inneren Schicht 7, die unmittelbar auf das textile Flächengebilde 3 aufgetragen ist, und einer äußeren Schicht 8 besteht, die auf der inneren Schicht 7 angeordnet ist. Vorteilhafterweise ist die äußere Schicht 8 mit einem schwarzen Pigment eingefärbt, während die innere Schicht 7 vorzugsweise mit einem weißen Pigment eingefärbt ist, d.h. die beiden Schichten 7 und 8 sind weiß bzw. schwarz gefärbt. Des weiteren ist auf der zweiten Schicht 8 noch eine äußere Schutzschicht 9 aus einem thermoplastischen Lack angebracht, der vorteilhafterweise farblos und transparent ist. Nachfolgend sind fünf Beispiele für die Zusammensetzung des schwerentflammbaren Kedermaterials aufgeführt, die verschiedene Anwendungsformen beschreiben. Prozentangaben beziehen sich auf das Gewicht.

**Beispiel 1**

Trägermaterial: Kette und Schuß Polyester, hochfest, Multifilamentgarn
Garnfeinheit: Kette und Schuß dtex 1100 x 1
Bindung: Leinwandbindung 1/1
Fadendichte: Kette und Schuß ca. 9 Fäden/cm
Beschichtung:
eine Seite: PVC ca. 39 %
Phthalat- und Phosphatweichmacher DOP, DINP, DPO ca. 39 %
$TiO_2$ als Pigment 3 %
$Sb_2O_3$, $Al_2(OH)_3$
als aktive Füllstoffe
(Schwerentflammbarkeitsadditive) 16 %
BaZn-Seifen als Thermo- und Witterungsstabilisator 3 %
Auftragsgewicht: ca. 350 g/m$^2$
Schutzschicht:
Polymethylmethacrylat (PMMA)-Lack (ca. 5 g/m$^2$ trocken)
andere Seite: Chloroprenkautschuk ca. 60 %

5

Pigmente, Füllstoffe und
Schwerentflammbarkeitsadditive ca. 30 %
 Vulkanisationsadditive 7 %
Alterungs- und Ozonschutzmittel 3 %
Auftragsgewicht: ca. 45 g/m$^2$

Außerdem enthalten die Beschichtungen noch geringe Anteile an Wetter- und Alterungsstabilisatoren und Verarbeitungsadditiven.

    Gesamtgewicht:   ca. 600 g/m$^2$

**Beispiel 2**

| | |
|---|---|
| Trägermaterial: | Kette und Schuß Polyester, hochfest, Multifilamentgarn |
| Garnfeinheit: | Kette und Schuß dtex 1100 x 1 |
| Bindung: | Panamabindung 2/2 |
| Fadendichte: | Kette und Schuß ca. 12 Fäden/cm |
| Beschichtung: | |
| eine Seite: | PVC ca. 40 % |
| | Phthalat- und Phosphatweichmacher ca. 40 % |
| | Pigmente, Füllstoffe und Schwerentflammbarkeitsadditive ca. 20 % |
| | Auftragsgewicht: ca. 380 g/m$^2$ |
| | Schutzschicht: |
| | Polymethylmethacrylat (PMMA)-Lack (ca. 5 g/m$^2$ trocken) |
| andere Seite: | Chloroprenkautschuk ca. 60 % |
| | Pigmente, Füllstoffe und Schwerentflammbarkeitsadditive ca. 40 % |
| | Auftragsgewicht: ca. 65 g/m$^2$ |

Außerdem enthalten die Beschichtungen noch geringe Anteile an Wetter- und Alterungsstabilisatoren und Verarbeitungsadditiven, wie in Beispiel 1 beschrieben.

    Gesamtgewicht:   ca. 720 g/m$^2$

**Beispiel 3**

| | |
|---|---|
| Trägermaterial: | Kette und Schuß Polyester, hochfest, Multifilamentgarn |
| Garnfeinheit: | Kette und Schuß dtex 1100 x 1 |
| Bindung: | Panamabindung 2/2 |
| Fadendichte: | Kette und Schuß ca. 12 Fäden/cm |
| Beschichtung: | |
| eine Seite: | PVC ca. 40 % |
| | Phthalat- und Phosphatweichmacher ca. 40 % |
| | Pigmente, Füllstoffe und Schwerentflammbarkeitsadditive ca. 20 % |
| | Auftragsgewicht: ca: 380 g/m$^2$ |
| | Schutzschicht: |
| | Polymethylmethacrylat (PMMA)-Lack (ca. 5 g/m$^2$ trocken) |
| andere Seite: | Polyurethan ca. 45 % |
| | Pigmente und Füllstoffe ca. 35 % |
| | Halogenspender ca. 20 % |
| | Auftragsgewicht: ca. 65 g/m$^2$ |

Außerdem enthalten die Beschichtungen noch geringe Anteile an Wetter- und Alterungsstabilisatoren und Verarbeitungsadditiven.

    Gesamtgewicht:   ca. 720 g/m$^2$

**Beispiel 4**

| | |
|---|---|
| Trägermaterial: | Kette und Schuß Polyester, hochfest, Multifilamentgarn |
| Garnfeinheit: | Kette und Schuß dtex 1100 x 1 |
| Bindung: | Panamabindung 2/2 |
| Fadendichte: | Kette und Schuß ca. 12 Fäden/cm |
| Beschichtung: | |

6

| eine Seite: | PVC ca. 40 % |
| | Phthalat- und Phosphatweichmacher ca. 40 % |
| | Pigmente, Füllstoffe und Schwerentflammbarkeitsadditive ca. 20 % |
| | Auftragsgewicht: ca. 380 g/m$^2$ |
| | Schutzschicht: |
| | Polymethylmethacrylat (PMMA)-Lack (ca. 5 g/m$^2$ trocken) |
| andere Seite: | Chlorsulfoniertes Polyethylen ca. 60 % |
| | Pigmente, Füllstoffe und Schwerentflammbarkeitsadditive ca. 30 % |
| | Vulkanisationsadditive ca. 7 % |
| | Alterungs- und Ozonschutzmittel ca. 3 % |
| | Auftragsgewicht: ca. 65 g/m$^2$ |

Außerdem enthalten die Beschichtungen noch geringe Anteile an Wetter- und Alterungsstabilisatoren und Verarbeitungsadditiven.

Gesamtgewicht: ca. 720 g/m$^2$

## Beispiel 5

| Trägermaterial: | Kette und Schuß Polyester, hochfest, Multifilamentgarn |
| Garnfeinheit: | Kette und Schuß dtex 1100 x 1 |
| Bindung: | Panamabindung 2/2 |
| Fadendichte: | Kette und Schuß ca. 12 Fäden/cm |
| Beschichtung: | |
| eine Seite: | PVC ca. 40 % |
| | Phthalat- und Phosphatweichmacher ca. 40 % |
| | Pigmente, Füllstoffe und Schwerentflammbarkeitsadditive ca. 20 % |
| | Auftragsgewicht: ca. 380 g/m$^2$ |
| | Schutzschicht: |
| | Polymethylmethacrylat (PMMA)-Lack (ca. 5 g/m$^2$ trocken) |
| andere Seite: | Polyurethan ca. 25 % |
| | Polymere auf Basis von Polyacrylaten ca. 20 % |
| | Pigmente und Füllstoffe ca. 35 % |
| | Halogenspender ca. 20 % |
| | Auftragsgewicht: ca. 65 g/m$^2$ |

Außerdem enthalten die Beschichtungen noch geringe Anteile an Wetter- und Alterungsstabilisatoren und Verarbeitungsadditiven.

Gesamtgewicht: ca. 720 g/m$^2$

Vergleichsbeispiel

In diesem Vergleichsversuch werden die Gleitreibungskoeffizienten $\mu$ für verschiedene Kedermaterialien und Planenstoffe untersucht. Es wurde dabei der Gleitreibungskoeffizient gegen die Oberfläche der Schutzplane mit der Bezeichnung Valmex FR 650/2 (PVC-Membranwerkstoff; FR = flame retardent) der Anmelderin bestimmt.

Der Berechnung des Gleitreibungskoeffizienten $\mu$ lag folgende Gleichung zugrunde:

$\mu = F_R/F_N$, wobei $F_N$ = Normalkraft und $F_R$ = Reibkraft (Kraft, mit der das Testmaterial gezogen werden mußte) bedeuten. Bei der Prüfung betrug $F_N$ 9,81 N und die kreisrunde Auflagefläche des Prüfgewichtes 85 cm$^2$.

| Versuchsmaterialien | Gleitreibungskoeffizient $\mu$ |
| --- | --- |
| Valmex FR 650/2 | 0,9 |
| unlackierte PVC-Plane | 1,0 |
| Keder, RS unbeschichtet | 0,5 |
| Keder, RS lackiert | 0,45 |
| Keder, RS schwerentflammbar gummiert | 0,5 |
| RS bedeutet Rückseite. | |

Aus dem Vergleichsversuch ist ersichtlich, daß der schwerentflammbar gummierte Keder der Erfindung praktisch die gleichen Gleitreibungseigenschaften aufweist wie die derzeit bekannten Kedermaterialien, sich also sehr gut in Kedernuten einziehen läßt. Darüber hinaus besitzt er die hervorragenden Schwerentflammbarkeitseigenschaften.

**Patentansprüche**

1. Kedermaterial für textile Bauten, wie Zelt-, Hallen- und Membrankonstruktionen, aufweisend ein beidseitig mit einem Polymer beschichtetes, textiles Flächengebilde (3), das auf einer Seite mit einem flammfest rezeptierten Polyvinylchloridweich-Material (2;6), das ggf. Pigmente, aktive und inaktive Füllstoffe und Stabilisatoren aufweist, und auf der anderen Seite mit einem flammhemmenden Schwerentflammbarkeitsadditive enthaltenden thermoplastischen oder vernetzten Elastomer (4) beschichtet ist.

2. Kedermaterial nach Anspruch 1, dadurch gekennzeichnet, daß die Polyvinylchloridweich-Materialbeschichtung (2) mit einer Schutzschicht aus einem thermoplastischen Lack (9) versehen ist.

3. Kedermaterial nach Anspruch 1 oder 2, dadurch gekennzeichnet, daß die Elastomer-Beschichtung (4) aus einem natürlichen oder künstlichen Kautschuk, einem chlorsulfonierten Polyethylen, einem Polyurethan, einem Polyacrylat, einem Polymethacrylat, einem Gemisch aus Polyurethan und Polyacrylat, einem Gemisch aus Polyurethan und Polymethacrylat, einem Gemisch aus Polyacrylat und Fluorpolymer oder einem Gemisch aus Polymethacrylat und Fluor-Polymer besteht.

4. Kedermaterial nach Anspruch 3, dadurch gekennzeichnet, daß die Elastomer-Beschichtung (4) aus einem natürlichen oder künstlichen Kautschuk besteht.

5. Kedermaterial nach mindestens einem der Ansprüche 1 bis 4, dadurch gekennzeichnet, daß die mit Polyvinylchloridweich-Material beschichtete Seite ein höheres Beschichtungsgewicht aufweist als die mit dem Elastomer beschichtete Seite.

6. Kedermaterial nach mindestens einem der Ansprüche 1 bis 5, dadurch gekennzeichnet, daß die mit Polyvinylchloridweich-Material beschichtete Lage (7) mindestens eine Beschichtungslage (8) aus vorzugsweise schwarzer Farbe aufweist.

7. Kedermaterial nach mindestens einem der Ansprüche 1 bis 6, dadurch gekennzeichnet, daß die beiderseitigen äußeren Beschichtungen (4 und 2 bzw. 9) farbgleich ausgebildet sind.

8. Kedermaterial nach mindestens einem der Ansprüche 1 bis 6, dadurch gekennzeichnet, daß die beiderseitigen äußeren Beschichtungen (4 und 2, bzw. 9) farblich unterschiedlich ausgebildet sind.

9. Kedermaterial nach mindestens einem der Ansprüche 1 bis 8, dadurch gekennzeichnet, daß das textile Flächengebilde (3) durch seine Faser selbst flammfest oder mit flammfest eingestellten Rezepturen ausgerüstet ist.

10. Kedermaterial nach mindestens einem der Ansprüche 1 bis 9, dadurch gekennzeichnet, daß es einen verminderten, vorzugsweise keinen, Dochteffekt zeigt.

Fig. 1

**5**

**9**

**4**

**8**

**6** **7** **3** Fig. 2